# FASCICULE DE BREVET EUROPEEN

(11) **EP 4 347 296 B1**
(45) Date de publication et mention de la délivrance du brevet: **19.02.2025**
(21) Numéro de dépôt: 22735531.0
(22) Date de dépôt: 26.04.2022
(51) Int. Cl.: B60K 11/08, B60K 13/02

(54) **COUPLAGE D'ÉQUIPEMENTS D'UN SYSTÈME DANS UN ENVIRONNEMENT FORTEMENT CONTRAINT**
KOPPLUNG VON AUSRÜSTUNGEN EINES SYSTEMS IN EINER STARK EINGEGRENZTEN UMGEBUNG
COUPLING OF EQUIPMENTS OF A SYSTEM IN A STRONGLY CONSTRAINED ENVIRONMENT

(30) Priorité: 28.05.2021 FR 2105563
(43) Date de publication de la demande: 10.04.2024
(73) Titulaire: Stellantis Auto SAS, 78300 Poissy (FR)
(72) Inventeur: BOUDAN, Julien, 91210 DRAVEIL (FR); GOURVENNEC, Thibault, 91210 DRAVEIL (FR); PERON, Rodolphe, 95220 HERBLAY (FR)
(74) Mandataire: BCIP
(86) Numéro de dépôt international: PCT/FR2022/050786
(87) Numéro de publication internationale: WO 2022/248787

(56) Documents cités:
- WO-A1-2014/140478
- WO-A1-2017/002146
- DE-A1- 102015 118 726

## Description

### Domaine technique de l'invention

L'invention concerne les systèmes qui comprennent deux équipements devant être couplés l'un à l'autre, et plus précisément le couplage de ces deux équipements.

### Etat de la technique

Certains systèmes, comme par exemple certains véhicules, comprennent un premier équipement auquel est couplé en au moins deux endroits un second équipement. A titre d'exemple purement illustratif un tel système peut être un véhicule, éventuellement automobile, dans lequel le premier équipement est une traverse supérieure d'une façade avant et le second équipement est une prise d'air propre à collecter et canaliser de l'air.

Le couplage entre les deux équipements se fait généralement par vissage et/ou par clippage au moyen d'au moins deux pattes de clippage, comme décrit dans le document brevet FR-B1 3018478. Ces types de couplage s'avèrent pratiques lors de l'assemblage, même s'ils imposent une gestion de pièces lorsqu'ils utilisent des pièces rapportées (comme par exemple des vis ou des clips). Cependant, ils s'avèrent difficilement utilisables, voire impossibles à utiliser, lorsque l'environnement est fortement contraint du fait de la présence d'autres équipements à proximité immédiate du lieu de couplage du second équipement. C'est par exemple le cas lorsque le premier équipement est une traverse supérieure d'une façade avant de véhicule sur laquelle est installé un mécanisme de verrouillage de capot juste à côté de l'endroit où doit être installé le second équipement (par exemple une prise d'air) et empêchant un clippage suivant une direction de l'espace (transversale ou verticale).

Par ailleurs, le couplage actuel par clippage n'assure généralement une immobilisation que suivant une direction de l'espace (longitudinale ou transversale ou verticale), ce qui peut s'avérer insuffisant dans certains cas.

Un autre système comprenant un premier équipement auquel est couplé un second équipement est connu du document WO 2014/140478 A1. 11

L'invention a donc notamment pour but d'améliorer la situation.

### Présentation de l'invention

Elle propose notamment à cet effet un système selon la revendication 1, comprenant un premier équipement auquel est couplé un second équipement. Le son premier équipement comprend des premier et deuxième éléments de couplage comportant respectivement des premier et second logements ouverts sur deux faces se joignant, et le second équipement comprend deux faces opposées et munies respectivement de première et deuxième parois saillantes, la première paroi saillante étant introduite dans le premier logement via ses deux faces ouvertes par une translation en biais du second équipement, et la deuxième paroi saillante étant introduite dans le second logement via ses deux faces ouvertes par une rotation du second équipement autour d'un axe virtuel perpendiculaire à la première paroi saillante.

Grâce à ce couplage du second équipement au premier équipement en une phase de translation en biais suivie d'une phase de rotation, le second équipement peut désormais passer juste à côté d'au moins un autre équipement sans toucher ce dernier, ce qui est particulièrement simple et avantageux dans un environnement fortement contraint.

Le système selon l'invention peut comporter d'autres caractéristiques qui peuvent être prises séparément ou en combinaison, et notamment :
- son premier équipement peut comprendre un troisième élément de couplage espacé du second logement. Dans ce cas, son second équipement peut comprendre un quatrième élément de couplage espacé de la deuxième paroi saillante et coopérant avec le troisième élément de couplage pour assurer un couplage complémentaire du second équipement au premier équipement ;
- en présence de la première option, le troisième élément de couplage peut être agencé sous la forme d'une protubérance, et le quatrième élément de couplage peut être agencé sous la forme d'une patte de clippage qui est clippée sur cette protubérance ;
- son premier équipement peut comprendre une troisième paroi située entre les premier et deuxième éléments de couplage et munie d'une ouverture. Dans ce cas, son second équipement peut comprendre une quatrième paroi saillante introduite dans cette ouverture lors de la rotation du second équipement ;
- en présence de la dernière option, la troisième paroi peut être précédée par un passage communiquant avec l'ouverture. Dans ce cas, la quatrième paroi saillante peut comprendre des première et seconde sous-parties perpendiculaires entre elles et introduites respectivement dans le passage et dans l'ouverture lors de la rotation du second équipement ;
- les premier et deuxième éléments de couplage peuvent être décalés l'un par rapport à l'autre. Dans ce cas, les première et deuxième parois saillantes sont également décalées l'une par rapport à l'autre ;
- il peut constituer un véhicule, éventuellement de type automobile,
- en présence de la dernière option, le premier équipement peut être une traverse supérieure d'une façade avant ;
- également en présence de la dernière option, le second équipement peut être une prise d'air propre à collecter et canaliser de l'air.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté avant, une petite partie d'un exemple de réalisation d'un système selon l'invention une fois le second équipement couplé au premier équipement,
[Fig. 2] illustre schématiquement, dans une vue en perspective du côté avant, une partie du premier équipement du système de la figure 1, avant le couplage du second équipement,
[Fig. 3] illustre schématiquement, dans une vue de face du côté de la face arrière, le second équipement du système de la figure 1, avant son couplage au premier équipement,
[Fig. 4] illustre schématiquement, dans une vue en perspective du côté gauche, une partie gauche du second équipement du système de la figure 1,
[Fig. 5] illustre schématiquement, dans une vue en perspective du côté avant, une partie droite du second équipement pendant la phase de translation en biais effectuée lors de son couplage au premier équipement du système de la figure 1,
[Fig. 6] illustre schématiquement, dans une vue en perspective du côté avant, une partie gauche du second équipement au début de la phase de rotation effectuée lors de son couplage au premier équipement du système de la figure 1,
[Fig. 7] illustre schématiquement, dans une vue en perspective du côté avant, la partie gauche du second équipement à un stade intermédiaire de la phase de rotation effectuée lors de son couplage au premier équipement du système de la figure 1, et
[Fig. 8] illustre schématiquement, dans une vue en perspective du côté avant, la partie gauche du second équipement à la fin de la phase de rotation effectuée lors de son couplage au premier équipement du système de la figure 1.

### Description détaillée de l'invention

L'invention a notamment pour but de proposer un système S comprenant des premier E1 et second E2 équipements couplés entre eux dans un environnement fortement contraint, par exemple du fait de la présence d'au moins un troisième équipement E3.

Dans ce qui suit, on considère, à titre d'exemple non limitatif, que le système S est un véhicule de type automobile, comme par exemple une voiture. Mais l'invention n'est pas limitée à ce type de système. Elle concerne en effet tout système dans lequel un second équipement doit être couplé à un premier équipement dans un environnement fortement contraint. Par conséquent, le système S pourra être un véhicule de n'importe quel type (terrestre, maritime (ou fluvial), ou aérien), un bâtiment, une installation (éventuellement industrielle), ou un appareil (éventuellement grand public), par exemple.

Par ailleurs, on considère dans ce qui suit, à titre d'exemple non limitatif, que le premier équipement E1 est une traverse supérieure d'une façade avant du véhicule S, et que le second équipement E2 est une prise d'air propre à collecter et canaliser de l'air pour l'acheminer dans une zone prédéfinie (par exemple près d'une machine motrice ou d'un échangeur de chaleur). Mais l'invention n'est pas limitée à ces types de premier et second équipements.

En outre, on considère dans ce qui suit, à titre d'exemple non limitatif, que le troisième équipement E3 est un mécanisme de verrouillage d'un capot avant du véhicule S. Mais l'invention n'est pas limitée à ce type de troisième équipement.

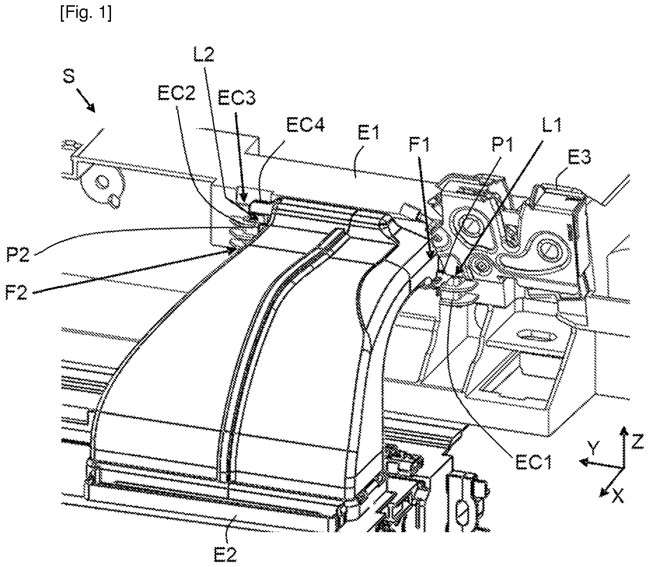

Sur les figures 1 à 8 la direction X est la direction longitudinale du système (ici un véhicule) S, laquelle est parallèle aux côtés latéraux comportant les portières latérales, la direction Y est la direction transversale du système S, laquelle est perpendiculaire à la direction longitudinale X, et la direction Z est la direction verticale du système S, laquelle est perpendiculaire aux directions longitudinale X et transversale Y.

Dans ce qui suit et ce qui précède les notions « d'avant » et « d'arrière » s'entendent par rapport à l'extrémité avant du véhicule S.

On a schématiquement illustré sur la figure 1 une petite partie d'un exemple de réalisation d'un système S selon l'invention (ici un véhicule automobile), une fois le second équipement E2 (ici une prise d'air) couplé au premier équipement E1 (ici une traverse supérieure de la façade avant du véhicule S) à proximité immédiate d'un troisième équipement E3 (ici un mécanisme de verrouillage du capot avant du véhicule S).

Le premier équipement E1 est ici propre à être installé transversalement (c'est-à-dire principalement suivant la direction transversale Y) dans la partie avant du système S, au niveau de la façade avant.

Comme illustré au moins partiellement sur les figures 1, 2 et 5 à 8, le premier équipement E1 comprend un premier élément de couplage EC1 comportant un premier logement L1 ouvert sur deux faces se joignant, et un deuxième élément de couplage EC2 comportant un second logement L2 ouvert sur deux faces se joignant et orienté vers le premier logement L1. Ici les deux faces ouvertes du premier logement L1, comme du second logement L2, ont des normales qui sont sensiblement parallèles respectivement aux directions verticale Z et transversale Y.

Comme illustré au moins partiellement sur les figures 1 et 5 à 8, le second équipement E2 comprend des première F1 et seconde F2 faces opposées et munies respectivement de première P1 et deuxième P2 parois saillantes. Ici, la première face F1 est située à droite et la seconde face F2 est située à gauche (lorsque l'on est placé devant le véhicule S en regardant vers sa partie arrière).

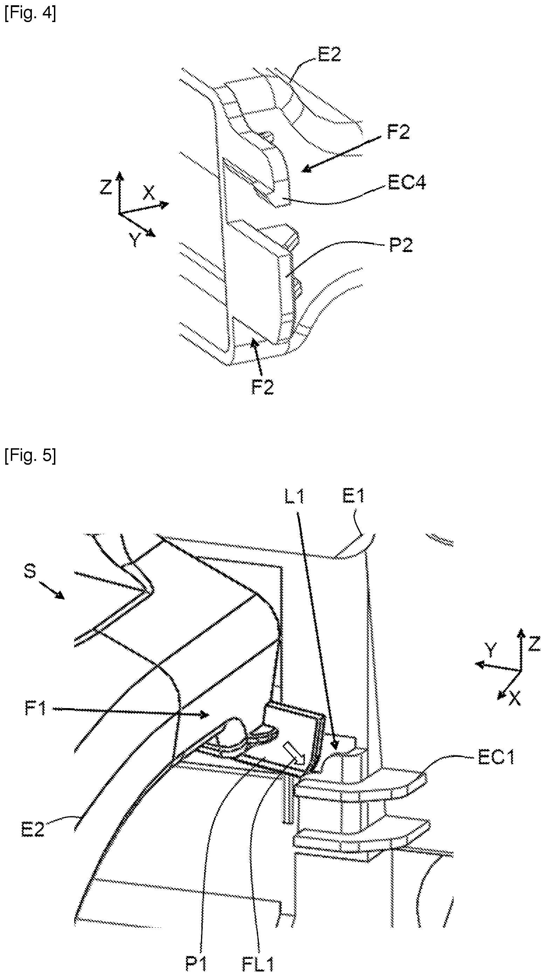

La première paroi saillante P1 est introduite dans le premier logement L1 via ses deux faces ouvertes par une translation en biais du second équipement E2 (matérialisée par la flèche FL1 de la figure 5). Cette translation en biais (flèche FL1) permet ici avantageusement de passer juste à côté du troisième équipement E3 sans le toucher afin de réaliser une partie du couplage, à savoir celui de la partie droite du second équipement E2 (via la première paroi saillante P1) au premier élément de couplage EC1 du premier équipement E1 (via son premier logement L1).

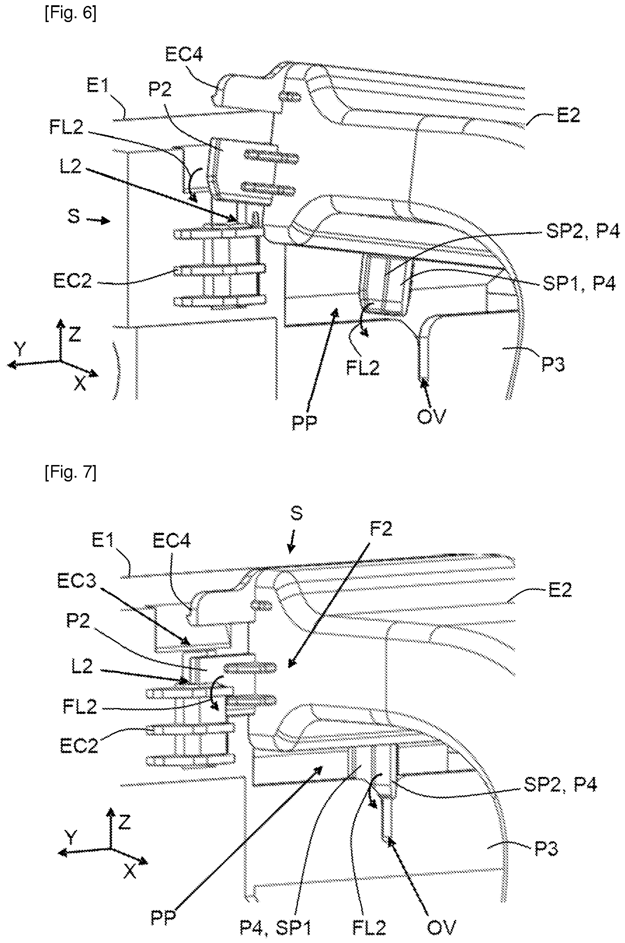

Une fois la première paroi saillante P1 introduite dans le premier logement L1, la deuxième paroi saillante P2 est introduite dans le second logement L2 via ses deux faces ouvertes par une rotation du second équipement E2 autour d'un axe virtuel perpendiculaire à la première paroi saillante P1 (et matérialisée par les flèches FL2 des figures 6 et 7). Cette rotation, ici vers le bas (flèches FL2), permet avantageusement de réaliser l'autre partie du couplage, à savoir celui de la partie gauche du second équipement E2 (via la deuxième paroi saillante P2) au deuxième élément de couplage EC2 du premier équipement E1 (via son second logement L2), toujours sans toucher le troisième équipement E3.

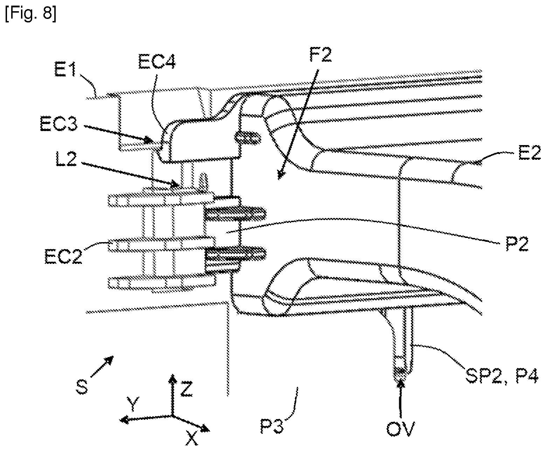

Le couplage du second équipement E2 au premier équipement E1 comprend donc une première phase de translation illustrée sur la figure 5 et permettant ici de passer juste à côté du troisième équipement E3, et une seconde phase de rotation illustrée sur les figures 6 et 7. Une fois le couplage terminé (translation en biais (FL1) plus rotation (FL2)) on dispose d'un assemblage de premier E1 et second E2 équipements couplés, illustré au moins partiellement sur les figures 1 et 8. Dans l'exemple illustré, le couplage permet avantageusement d'immobiliser le second équipement E2 par rapport au premier équipement E1 suivant les directions transversale X et longitudinale Y, du fait des logements des première L1 et deuxième L2 parois saillantes respectivement dans les premier L1 et second L2 logements (partiellement ouverts).

Par exemple, et comme illustré non limitativement sur les figures 1, 2 et 5, le premier élément de couplage EC1 peut être une paroi qui est en partie solidarisée à une face avant du premier équipement E1 de manière à définir entre elle et cette face avant le premier logement L1, et qui peut être renforcée par au moins une nervure.

Egalement par exemple, et comme illustré non limitativement sur les figures 1, 2 et 6 à 8, le deuxième élément de couplage EC2 peut être une autre paroi qui est en partie solidarisée à la face avant du premier équipement E1 de manière à définir entre elle et cette face avant le second logement L2, et qui peut être renforcée par au moins une nervure.

On notera, comme illustré non limitativement et au moins partiellement sur les figures 1 à 3, que les premier EC1 et deuxième EC2 éléments de couplage peuvent être décalés l'un par rapport à l'autre. Dans ce cas les première P1 et deuxième P2 parois saillantes sont également décalées l'une par rapport à l'autre. Cela permet de faciliter l'évitement du troisième équipement E3 pendant la phase de translation.

Egalement par exemple, et comme illustré non limitativement sur les figures 1, 2 et 6 à 8, le premier équipement E1 peut avantageusement comprendre un troisième élément de couplage EC3 espacé du second logement L2 (ici vers le haut). Dans ce cas, et comme illustré non limitativement sur les figures 1, 3, 4 et 6 à 8, le second équipement E2 peut comprendre un quatrième élément de couplage EC4 espacé de la deuxième paroi saillante P2 (ici vers le haut) et coopérant avec le troisième élément de couplage EC3 pour assurer un couplage complémentaire du second équipement E2 au premier équipement E1. Dans l'exemple illustré, le couplage complémentaire permet avantageusement d'immobiliser le second équipement E2 par rapport au premier équipement E1 suivant la direction verticale Z.

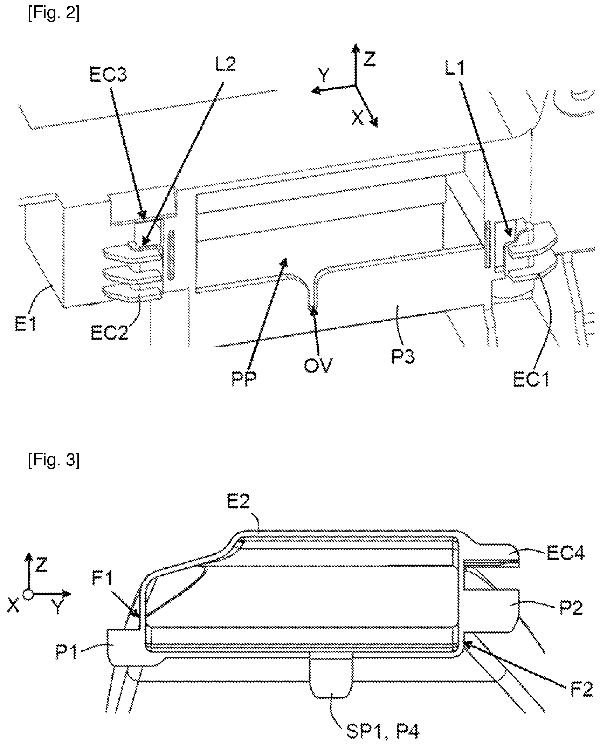

A titre d'exemple, et comme illustré non limitativement et au moins partiellement sur les figures 2 à 8, le troisième élément de couplage EC3 peut être agencé sous la forme d'une protubérance (par exemple un bord saillant), et le quatrième élément de couplage EC4 peut être agencé sous la forme d'une patte de clippage clippée sur la protubérance EC3. On comprendra que la patte de clippage EC4 comprend une tête qui, une fois passée au-delà (ici en-dessous) de la protubérance EC3, vient s'ancrer sur cette dernière (PC3).

On notera qu'un agencement inverse peut être envisagé, à savoir un quatrième élément de couplage EC4 agencé sous la forme d'une protubérance, et un troisième élément de couplage EC3 agencé sous la forme d'une patte de clippage clippée sur la protubérance EC4.

On notera également, comme illustré non limitativement et au moins partiellement sur les figures 2, 3 et 6 à 8, que le premier équipement E1 peut avantageusement comprendre une troisième paroi P3 située entre les premier EC1 et deuxième EC2 éléments de couplage et munie d'une ouverture (ou découpe) OV. Dans ce cas, le second équipement E2 peut comprendre une quatrième paroi saillante P4 qui est introduite dans l'ouverture OV lors de la rotation du second équipement E2 (voir figures 6 à 8). Cela est particulièrement avantageux car cela permet non seulement d'assurer une indexation du positionnement du second équipement E2 par rapport au premier équipement E1, ici suivant les directions transversale Y et verticale Z, mais aussi de guider le second équipement E2 pendant sa rotation. Afin de renforcer cette fonction de guidage, il est avantageux, comme illustré non limitativement, que l'entrée (ici supérieure) de l'ouverture OV soit évasée (ici sur la gauche) dans la zone où le contact se fait en premier avec la quatrième paroi saillante P4.

Par exemple, et comme illustré non limitativement et au moins partiellement sur les figures 2, 3 et 6 à 8, la troisième paroi P3 peut être précédée (du côté de sa face arrière) par un passage PP qui communique avec l'ouverture OV.

Dans ce cas, la quatrième paroi saillante P4 peut comprendre des première SP1 et seconde SP2 sous-parties qui sont perpendiculaires entre elles et introduites respectivement dans le passage PP et dans l'ouverture OV lors de la rotation du second équipement E2. Cela est avantageux car cela permet d'assurer en complément une indexation du positionnement du second équipement E2 par rapport au premier équipement E1, ici suivant la direction longitudinale X. En effet, lorsque la première sous-partie SP1 est sensiblement au contact de la face arrière de la troisième paroi P3, on est certain que les première P1 et deuxième P2 parois saillantes sont respectivement logées dans les premier L1 et second L2 logements.

## Revendications

1. Système (S) comprenant un premier équipement (E1) auquel est couplé un second équipement (E2), ledit premier équipement (E1) comprenant des premier (EC1) et deuxième (EC2) éléments de couplage comportant respectivement des premier (L1) et second (L2) logements ouverts sur deux faces se joignant, **caractérisé en ce que** ledit second équipement (E2) comprend deux faces (F1, F2) opposées et munies respectivement de première (P1) et deuxième (P2) parois saillantes, ladite première paroi saillante (P1) étant introduite dans ledit premier logement (L1) via ses deux faces ouvertes par une translation en biais dudit second équipement (E2), et ladite deuxième paroi saillante (P2) étant introduite dans ledit second logement (L2) via ses deux faces ouvertes par une rotation dudit second équipement (E2) autour d'un axe virtuel perpendiculaire à ladite première paroi saillante (P1).

2. Système selon la revendication 1, **caractérisé en ce que** ledit premier équipement (E1) comprend un troisième élément de couplage (EC3) espacé dudit second logement (L2), et **en ce que** ledit second équipement (E2) comprend un quatrième élément de couplage (EC4) espacé de ladite deuxième paroi saillante (P2) et coopérant avec ledit troisième élément de couplage (EC3) pour assurer un couplage complémentaire dudit second équipement (E2) audit premier équipement (E1).

3. Système selon la revendication 2, **caractérisé en ce que** ledit troisième élément de couplage (EC3) est agencé sous la forme d'une protubérance, et ledit quatrième élément de couplage (EC4) est agencé sous la forme d'une patte de clippage clippée sur ladite protubérance (EC3).

4. Système selon l'une des revendications 1 à 3, **caractérisé en ce que** ledit premier équipement (E1) comprend une troisième paroi (P3) située entre lesdits premier (EC1) et deuxième (EC2) éléments de couplage et munie d'une ouverture (OV), et **en ce que** ledit second équipement (E2) comprend une quatrième paroi saillante (P4) introduite dans ladite ouverture (OV) lors de ladite rotation du second équipement (E2).

5. Système selon la revendication 4, **caractérisé en ce que** ladite troisième paroi (P3) est précédée par un passage (PP) communiquant avec ladite ouverture (OV), et **en ce que** ladite quatrième paroi saillante (P4) comprend des première (SP1) et seconde (SP2) sous-parties perpendiculaires entre elles et introduites respectivement dans ledit passage (PP) et dans ladite ouverture (OV) lors de ladite rotation du second équipement (E2).

6. Système selon l'une des revendications 1 à 5, **caractérisé en ce que** lesdits premier (EC1) et deuxième (EC2) éléments de couplage sont décalés l'un par rapport à l'autre, et lesdites première (P1) et deuxième (P2) parois saillantes sont décalées l'une par rapport à l'autre.

7. Système selon l'une des revendications 1 à 6, **caractérisé en ce qu'**il constitue un véhicule.

8. Système selon la revendication 7, **caractérisé en ce que** ledit premier équipement (E1) est une traverse supérieure d'une façade avant.

9. Système selon la revendication 7 ou 8, **caractérisé en ce que** ledit second équipement (E2) est une prise d'air propre à collecter et canaliser de l'air.

10. Système selon l'une des revendications 7 à 9, **caractérisé en ce qu'**il constitue un véhicule automobile.

## Patentansprüche

1. System (S) mit einer ersten Einrichtung (E1), mit der eine zweite Einrichtung (E2) gekoppelt ist, wobei die erste Einrichtung (E1) erste (EC1) und zweite (EC2) Kopplungselemente aufweist, die jeweils erste (L1) und zweite (L2) offene Aufnahmen auf zwei sich verbindenden Flächen aufweisen, **dadurch gekennzeichnet, dass** die zweite Einrichtung (E2) zwei gegenüberliegende Flächen (F1, F2) aufweist, die jeweils mit einer ersten (P1) und einer zweiten (P2) vorstehenden Wand versehen sind, wobei die erste vorstehende Wand (P1) durch eine Schrägverschiebung der zweiten Einrichtung in die erste Aufnahme (L1) über ihre beiden offenen Flächen eingeführt wird (E2), wobei die zweite vorspringende Wand (P2) in das zweite Gehäuse (L2) über ihre beiden offenen Flächen durch eine Drehung der zweiten Einrichtung (E2) um eine virtuelle Achse senkrecht zu der ersten vorspringenden Wand (P1) eingeführt wird.

2. System nach Anspruch 1, **dadurch gekennzeichnet, dass** die erste Einrichtung (E1) ein drittes Kopplungselement (EC3) aufweist, das von dem zweiten Gehäuse (L2) beabstandet ist, und dass die zweite Einrichtung (E2) ein viertes Kopplungselement (EC4) aufweist, das von der zweiten vorstehenden Wand (P2) beabstandet ist und mit dem dritten Kopplungselement (EC3) zusammenwirkt, um eine komplementäre Kopplung der zweiten Einrichtung (E2) mit der ersten Einrichtung (E1) sicherzustellen.

3. System nach Anspruch 2, **dadurch gekennzeichnet, dass** das dritte Kopplungselement (EC3) als ein Vorsprung und das vierte Kopplungselement (EC4) als eine an den Vorsprung (EC3) angeklippte Klipplasche angeordnet ist.

4. System nach einem der Ansprüche 1 bis 3, **dadurch gekennzeichnet, dass** die erste Einrichtung (E1) eine dritte Wand (P3) umfasst, die zwischen dem ersten (EC1) und dem zweiten (EC2) Kopplungselement angeordnet ist und mit einer Öffnung (OV) versehen ist, und dass die zweite Einrichtung (E2) eine vierte vorstehende Wand (P4) umfasst, die bei der Drehung der zweiten Einrichtung (E2) in die Öffnung (OV) eingeführt wird.

5. System nach Anspruch 4, **dadurch gekennzeichnet, dass** der dritten Wand (P3) ein Durchgang (PP) vorangeht, der mit der Öffnung (OV) in Verbindung steht, und dass die vierte vorstehende Wand (P4) erste (SP1) und zweite (SP2) senkrechte Teilabschnitte aufweist, die jeweils in den Durchgang (PP) und die Öffnung (OV) bei der Drehung der zweiten Einrichtung (E2) eingeführt werden.

6. System nach einem der Ansprüche 1 bis 5, **dadurch gekennzeichnet, dass** das erste (EC1) und das zweite (EC2) Kopplungselement zueinander versetzt sind und die erste (P1) und die zweite (P2) hervorstehende Wand zueinander versetzt sind.

7. System nach einem der Ansprüche 1 bis 6, **dadurch gekennzeichnet, dass** es ein Fahrzeug bildet.

8. System nach Anspruch 7, **dadurch gekennzeichnet, dass** die erste Einrichtung (E1) ein oberer Querträger einer vorderen Fassade ist.

9. System nach Anspruch 7 oder 8, **dadurch gekennzeichnet, dass** die zweite Einrichtung (E2) ein Lufteinlass ist, der zum Sammeln und Kanalisieren von Luft geeignet ist.

10. System nach einem der Ansprüche 7 bis 9, **dadurch gekennzeichnet, dass** es ein Kraftfahrzeug bildet.

## Claims

1. A system (S) comprising a first equipment (E1) to which a second equipment (E2) is coupled, said first equipment (E1) comprising first (EC1) and second (EC2) coupling elements respectively comprising first (L1) and second (L2) housings open on two faces joining each other, **characterized in that** said second equipment (E2) comprises two faces (F1, F2) opposite each other and provided respectively with first (P1) and second (P2) projecting walls, said first projecting wall (P1) being introduced into said first housing (L1) via its two faces open by an oblique translation of said second equipment (E2) and said second projecting wall (P 2) being introduced into said second housing (L 2) via its two open faces by rotation of said second equipment (E 2) about a virtual axis perpendicular to said first projecting wall (P 1).

2. System according to claim 1, **characterized in that** said first equipment (E1) comprises a third coupling element (EC3) spaced apart from said second housing (L2), and **in that** said second equipment (E2) comprises a fourth coupling element (EC4) spaced apart from said second projecting wall (P2) and cooperating with said third coupling element (EC3) to ensure complementary coupling of said second equipment (E2) to said first equipment (E1).

3. System according to claim 2, **characterized in that** the said third coupling element (EC3) is arranged in the form of a protuberance, and the said fourth coupling element (EC4) is arranged in the form of a clipping tab clipped onto the said protuberance (EC3).

4. System according to one of claims 1 to 3, **characterized in that** the said first item of equipment (E1) comprises a third wall (P3) situated between the said first (EC1) and second (EC2) coupling elements and provided with an opening (OV), and **in that** the said second item of equipment (E2) comprises a fourth projecting wall (P4) introduced into the said opening (OV) during the said rotation of the second item of equipment (E2).

5. System according to claim 4, **characterized in that** the said third wall (P3) is preceded by a passage (PP) communicating with the said opening (OV), and **in that** the said fourth projecting wall (P4) comprises first (SP1) and second (SP2) sub-parts perpendicular to one another and introduced respectively into the said passage (PP) and into the said opening (OV) during the said rotation of the second equipment (E2).

6. System according to one of claims 1 to 5, **characterized in that** the said first (EC1) and second (EC2) coupling elements are offset with respect to one another, and the said first (P1) and second (P2) projecting walls are offset with respect to one another.

7. System according to one of claims 1 to 6, **characterized in that** it constitutes a vehicle.

8. System according to claim 7, **characterized in that** the said first item of equipment (E1) is an upper cross-member of a front facade.

9. System according to claim 7 or 8, **characterized in that** the said second equipment (E2) is an air intake suitable for collecting and channeling air.

10. System according to one of claims 7 to 9, **characterized in that** it constitutes a motor vehicle.
